# EUROPEAN PATENT SPECIFICATION

(11) **EP 1 703 677 B1**
(45) Date of publication and mention of the grant of the patent: **28.11.2007**
(21) Application number: 06111269.4
(22) Date of filing: 16.03.2006
(51) Int. Cl.: H04L 12/42, H04L 12/437, H04B 10/207

(54) **Access line termination system, access line termination device and transmission control method**
Zugangsleitungsabschlusssystem, Zugangsleitungsabschlusseinrichtung und Übertragungssteuerungsverfahren
Système de terminaison de ligne d'accès, unité de terminaison de ligne d'accès et méthode de commande de transmission

(30) Priority: 16.03.2005 JP 2005074190
(43) Date of publication of application: 20.09.2006
(73) Proprietor: NEC CORPORATION, Tokyo (JP)
(72) Inventor: Ozaki, Hirokazu, Tokyo (JP)
(74) Representative: Betten & Resch

(56) References cited:
- EP-A- 0 923 267
- EP-A- 1 276 262
- EP-A- 1 471 673
- WO-A-00/42739
- US-A- 5 127 067

## Description

### BACKGROUND OF THE INVENTION

### Field of the Invention

The present invention relates to a line access termination system, an access device and a line accommodation method used therefor and, more particularly, a ring-type asymmetric access line termination system in which a ring is formed of up and down asymmetric access devices.

### Description of the Related Art

With the spread of ADSL (Asymmetric Digital Subscriber Line) and the like, broadband system has been rapidly adopted for access lines in our country and other foreign countries.

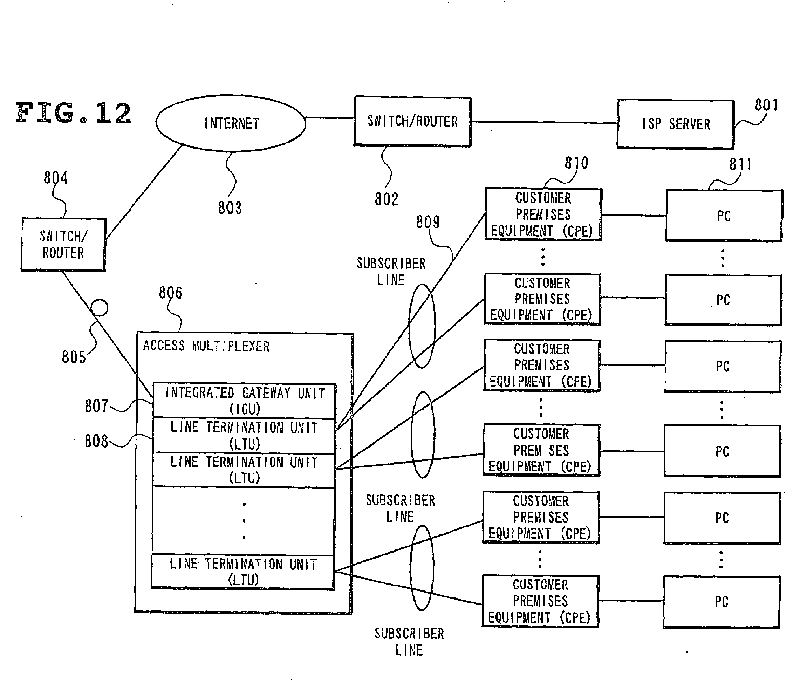

Fig. 12 is a diagram showing an example of a network structure of Internet connection service using an access line termination device. At the house of an end user, a PC (personal computer) 811 is connected to an access line through a customer premises equipment (CPE) 810 (see, for example, Japanese Patent Laying-Open (Kokai) No. 2004-88379 (Literature 1)).

On the side of a central office, disposed is an access multiplexer (AM) 806 which terminates these plurality of access lines and integrate them into one high-speed signal. The access multiplexer 806 is internally provided with an integrated gateway unit (IGU) 807 and a line termination unit (LTU) 808.

At the integrated gateway unit 807, signal protocol conversion is executed as required as well as multiplexing. Disposed farther to the access multiplexer 806 is a switch/router 804 through which a signal goes out to an internet 803. Farther to the internet 803, connection is made to an ISP (Internet Service Provider) server 801 and the like again through a switch/router 802.

The access multiplexer 806, which has been conventionally disposed in many cases in a central office of a carrier [GC (Group Unit Center) etc.], is recently demanded to locate extending far away from a central office in order to accommodate users at remote places. In this case, optical fibers extend from a central office to a remote place and ordinarily disposed, at the remote place, is a small-sized access line termination device taking economical efficiency and space-saving into consideration.

For such a small-sized access line termination device, realization of a highly reliable device is required which has a function of monitoring control at a remote place, in particular, a function of giving a notification and recovering a failure when a failure occurs, and as a solution, proposed is a method of, in a network structure in which with a central office at the center, pipelines radially extend to a remote office having a small capacity, causing signals go around by connecting devices at remote offices in a ring.

In the above-described conventional access line termination system in which signals go around in a ring with devices at remote offices connected, however, an increase in ring transmission capacity requires modification/ expansion of hardware such as new introduction of an optical interface. Under these circumstances, transmission efficiency of already set up optical fibers should be further improved to increase economical efficiency of the system as a whole.

EP-A-1 276 262 discloses a communication network ring with data splitting in the nodes. Connections between communication nodes are established along a ring, with nodes at successive positions along the ring and two-way point to point communication connections between pairs of the nodes at successive positions along the ring. Data addressed to a node is split into parts that are transmitted to the node along opposite directions along the ring. Intermediate nodes forward the data. The nodes monitor the connections and other nodes to detect whether there is a failure of transmission along any direction and, if there is a failure along one of the directions, suppressing transmitting all of the data in a failing one of the directions.

EP-A-1 471 673 discloses a method and apparatus for using the complete resource capacity of a synchronous digital hierarchy infrastructure, with a protection system, in the presence of a data (packet) network, in which the complete SDH/SONET protection (spare) capacity is used to carry data traffic in both normal and failure conditions. In case of failure the working capacity is cut, and the TDM traffic is subject to a protection mechanism and is shifted over the protection capacity; the part of high (and medium) priority data traffic is shifted over the protection capacity; a part of the data-low-priority extra-traffic (transported over the protection capacity in normal conditions) will share the remaining protection capacity with the low-priority best-effort part of the data traffic transported over the working capacity.

EP-A-0 923 267 discloses a method for transmitting digital data. Data are transmitted between at least two network units and a line termination, whereas the network units are connected to the line termination via an access network and the transmission of the data is performed in a synchronous digital hierarchy container (SDH container).

### SUMMARY OF THE INVENTION

An object of the present invention is to solve the above-described problem and provide an access line termination system, an access line termination device and a transmission control method which realize expansion of a down transmission capacity in a normal state without changing/expanding a transmission path interface.

The present invention is defined in the independent claims. The dependent claims define embodiments of the invention.

More specifically, the access line termination system according to an embodiment of the present invention is premised on a network structure in which a telephone exchange is located at the center (hereinafter referred to as a central office), from which pipelines radially extend to an office at a remote place whose capacity is small (hereinafter referred to as a remote office).

In such a network structure, at the time of realizing a line accommodation method which enables an access line termination device with a small capacity disposed extending to a remote office to be efficiently accommodated at a central office and which has high reliability as a whole, adapting a ring structure to an up and down asymmetric access lines enables more efficient use of optical fibers and expansion of a transmission capacity.

According to one embodiment of the invention, an access line termination system with an access line termination device which terminates asymmetric up signal and down signal connected in a ring for causing the up signal and the down signal to travel, wherein the down signal is separated to travel rightward and leftward on the ring, and the access line termination device includes a multiplexing unit which multiplexes either one of the rightward and leftward down signals with the up signal to transmit the multiplexed signal on the same signal line.

In other words, the access line termination system according to an embodiment of the present invention enables expansion of a transmission capacity in a normal state without involving change or expansion of hardware by assigning a part of a down signal to a free band of an up signal flowing on the ring.

In addition, by giving two priorities, high priority and low priority, to a down signal, the access line termination system according to the present invention enables a down signal having high priority to be remedied at the time of switching a direction of a signal going around on the ring in an emergency.

Furthermore, the access line termination system according to the present invention enables rapid control operation by giving a warning notification or executing switching control by using overhead of a main signal going around in the ring.

There is achieved the effect of realizing expansion of a down transmission capacity in a normal state without change/expansion of a transmission line interface by the structure and operation set forth in the following.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing a part of a structure of an access line termination system according to one embodiment of the present invention;
Fig. 2 is a block diagram showing an example of the entire structure of the access line termination system according to one embodiment of the present invention;
Fig. 3 is a diagram showing a flow of a counterclockwise down signal and a clockwise down signal in a normal state according to one embodiment of the present invention;
Fig. 4 is a diagram showing a flow of an up signal and a down signal when a failure occurs on a signal line in a pipeline 224 shown in Fig. 3;
Fig. 5 is a block diagram showing an example of a structure of a first optical expansion unit mounted on a parent device shown in Fig. 2;
Fig. 6 is a block diagram showing an example of a structure of a second optical expansion unit mounted on the parent device shown in Fig. 1;
Fig. 7 is a diagram showing operation of the second optical expansion unit shown in Fig. 6;
Fig. 8 is a diagram showing operation of the second optical expansion unit shown in Fig. 6;
Fig. 9 is a block diagram showing an example of a structure of a third optical expansion unit mounted on a remote device shown in Fig. 1;
Fig. 10 is a diagram showing operation of the third optical expansion unit shown in Fig. 1;
Fig. 11 is a diagram showing operation of the third optical expansion unit shown in Fig. 1; and
Fig. 12 is a block diagram showing a structure of a conventional access line termination system.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

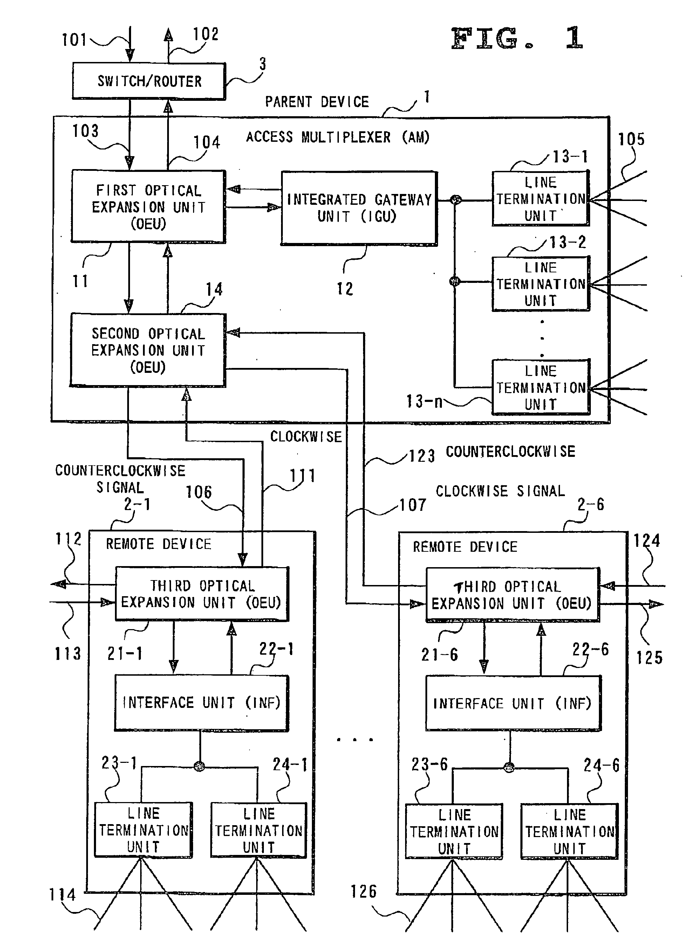

Fig. 1 is a block diagram showing a part of a structure of an access line termination system according to one embodiment of the present invention.

In Fig. 1, the access line termination system according to one embodiment of the present invention includes an access multiplexer (AM) (hereinafter referred to as a parent device) 1 at a central office as an office at the center, a plurality of access multiplexers (hereinafter referred to as a remote device) 2-1 to 2-6 (the remote devices 2-2 to 2-5 are not shown) as a remote place office (hereinafter referred to as a remote office) connected downstream to the parent device and having a small capacity and a switch/router 3 which connects the parent device 1 to the Internet (not shown).

The parent device 1 includes a first optical expansion unit (OEU) 11, an integrated gateway unit (IGU) 12, line termination units (LTU) 13-1 to 13-n and a second optical expansion unit (OEU) 14.

The remote devices 2-1 to 2-6 include third optical expansion units (OEU) 21-1 to 21-6 (the third optical expansion units 21-2 to 21-5 are not shown), interface units (INF) 22-1 to 22-6 (the interface units 22-2 to 22-5 are not shown) and line termination units (LTU) 23-1 to 23-6 and 24-1 to 24-6 (the line termination units 23-2 to 23-5 and 24-2 to 24-5 are not shown), respectively.

The remote devices 2-1 to 2-6 terminate such an asymmetric access line in which a volume of data of an up signal is small as compared with that of a down signal as ADSL (Asymmetric Digital Subscriber Line).

A down signal 103 applied to the parent device 1 from the Internet through the switch/router 3 or the like is branched at the first optical expansion unit 11 into a signal to be processed within the device and a signal directed to the downstream remote devices 2-1 to 2-6. Executed here is simple branching into two (copying of an original signal).

The signal directed to the parent device 1 is applied to the integrated gateway unit (IGU) 12 and output to an access line further through the line termination units (LTU) 13-1 to 13-n.

On the other hand, a signal directed to the downstream remote devices 2-1 to 2-6 is divided into two directions at the second optical expansion unit 14 to hereafter generate a clockwise signal 107 and a counterclockwise signal 106. In this case, separation is made such that an original signal is logical multiplexing of the counterclockwise signal 106 and the clockwise signal 107.

Upper limit of a capacity of the counterclockwise signal 106 is a transmission capacity of a signal line (optical fiber and the like) forming the ring, while an upper limit of a capacity of the clockwise signal 107 is set to be a value obtained by subtracting a total sum of up signal capacities (which will be described later) of the respective remote devices 2-1 to 2-6 from a transmission capacity of a signal line (optical fiber and the like) forming the ring.

The counterclockwise signal 106 is applied to its first remote device 2-1 shown in Fig. 1. On the remote device 2-1, the third optical expansion unit 21-1 is mounted to branch a signal into a signal to be processed within the remote device 2-1 (signal directed to the remote device 2-1) and a signal 112 directed to a downstream remote device (not shown). The signal directed to the remote device 2-1 passes through the interface unit 22-1 having the same integrated gateway function as that of the above-described parent device 1 to be output to an access line 114 through the line termination units 23-1 and 24-1.

The counterclockwise signal 106 goes around counterclockwise through the remote devices 2-1 to 2-6 connected in the ring as described above and is branched and distributed by the respective remote devices 2-1 to 2-6.

The clockwise signal 107, similarly to the above-described counterclockwise signal 106, is also applied to its first remote device 2-6 and goes clockwise around the ring to be branched and distributed at the respective remote devices 2-6 to 2-1.

Next, operation of the present embodiment will be described along a flow of an up signal with reference to Fig. 1.

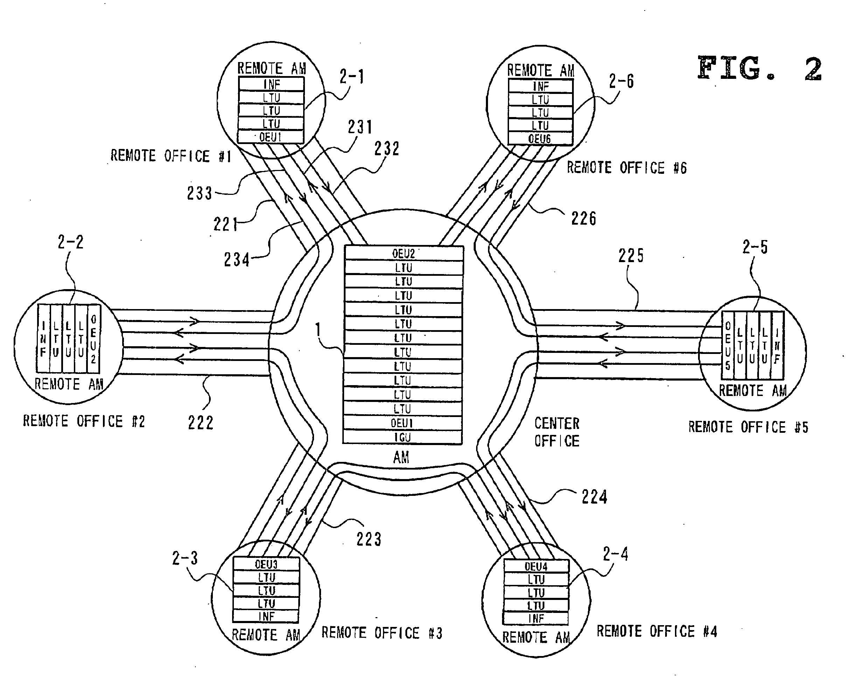

An up signal on an access line 126 accommodated in the remote device 2-6 is applied to the interface unit 22-6 through the line termination units 23-6 and 24-6 and multiplexed. The up signal multiplexed at the interface unit 22-6 is further applied to the third optical expansion unit 21-6 and multiplexed with the clockwise down signal 107 from the parent device 1 and sent out as a signal 125 directed to the adjacent remote device 2-5 (see Fig. 2). At the adjacent remote device 2-5, an up signal of its own device and the signal from the remote device 2-6 at the preceding stage are multiplexed and sent out to the remote device 2-4 at the succeeding stage.

Thus, in the present embodiment, up signals of the remote devices 2-1 to 2-6 connected in a ring are sequentially collected and multiplexed to ultimately input a multiplexed signal 111 to the parent device 1 from the last remote device 2-1.

The parent device 1 multiplexes the up signal 111 collected (multiplexed) while traveling around the ring and an up signal on an access line 105 accommodated in the parent device 1 itself, and after separating and abandoning the clockwise down signal 107 which has been transmitted by the parent device 1 by itself to go around the ring, outputs the obtained signal to the switch/router 3 at the succeeding stage or the like.

As described above, down signals are traveled in two directions, counterclockwise and clockwise, on the ring, which are delivered by broadcasting to the respective remote devices 2-1 to 2-6 and up signals are traveled clockwise on the ring, which are collected and multiplexed.

Here, determine assignment of signals such that a total sum of clockwise down signals and up signals fails to exceed a transmission capacity of a signal line (optical fiber or the like).

Although a signal format should be selected to meet a system of an access device, in a case of an ADSL, for example, the access line termination device according to the present embodiment can be structured, with optical ATM (Asynchronous Transfer Mode) signals going around on a ring, by executing optical branching or cell copying for a down signal and executing cell multiplexing for an up signal.

At the time of separating the clockwise down signal 107 and the counterclockwise down signal 106 in the parent device 1, a cell flow is separated by using a virtual path (VP) number, a virtual channel (VC) number of an ATM or the like to assign a VP number or VC number varying with each direction as identification information. Since a clockwise signal is a signal obtained by multiplexing the down signal 107 from the parent device 1 and an up signal, a VP number or a VC number varying with the up direction and the down direction is assigned as identification information for separating a down signal at the respective remote devices 2-1 to 2-6.

Although illustrated in Fig. 1 is a structure for transmitting an up signal and a down signal by different optical fibers, up and down signals can be transmitted by one fiber by using wavelength-multiplexing.

Fig. 2 is a block diagram showing an example of the entire structure of the access line termination system according to one embodiment of the present invention.

In Fig. 2, the access line termination system according to one embodiment of the present invention has a network structure in which the parent device 1 of a telephone exchange is disposed at the center (hereinafter referred to as a central office), from which pipelines 221 to 226 extend radially to the remote devices 2-1 to 2-6 as a remote place office (hereinafter referred to as a remote office) (Remote Offices #1 to #6) with a small capacity. In practice, it is common in an access network to adopt such a network structure. In the pipelines 221 to 226, signal lines (optical fibers or the like) are laid to reciprocate and connected between the parent device 1 and the remote devices 2-1 to 2-6 in a ring.

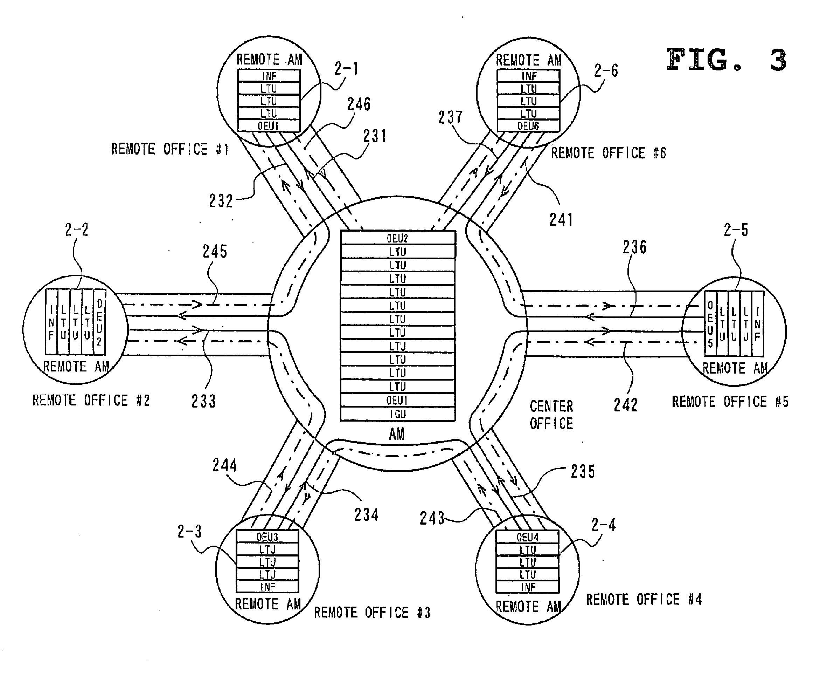

Fig. 3 is a diagram showing a flow of a counterclockwise down signal and a clockwise down signal in a normal state in the network structure according to one embodiment of the present invention illustrated in Fig. 2.

In Fig. 3, a solid line indicates a flow of a counterclockwise down signal and a chain dotted line indicates a flow of a clockwise down signal. In this case, the clockwise signal indicated by the chain dotted line and an up signal not shown will be multiplexed into one signal line (optical fiber) to go around on the ring in Fig. 3.

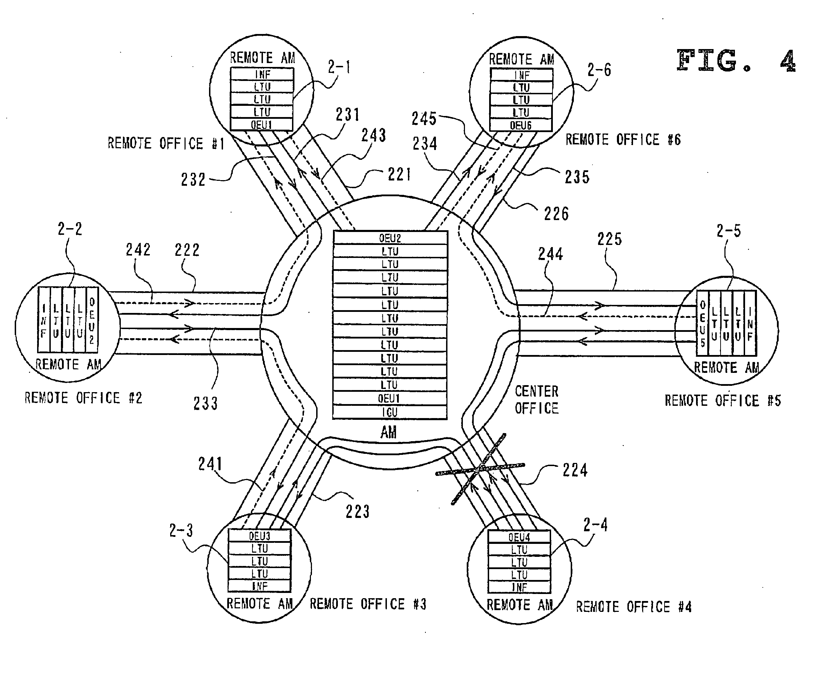

Fig. 4 is a diagram showing a flow of an up signal and a down signal when a failure occurs on the signal line in the pipeline 224 illustrated in Fig. 3.

In Fig. 4, a solid line indicates a flow of a counterclockwise down signal and a dotted line indicates a flow of an up signal.

In this case, the clockwise down signal has its transmission from the parent device 1 stopped. Accordingly, a down signal having high priority is assigned to a counterclockwise down signal and on the assumption that a clockwise down signal might be cut off in an emergency, a signal having low priority is assigned to the signal.

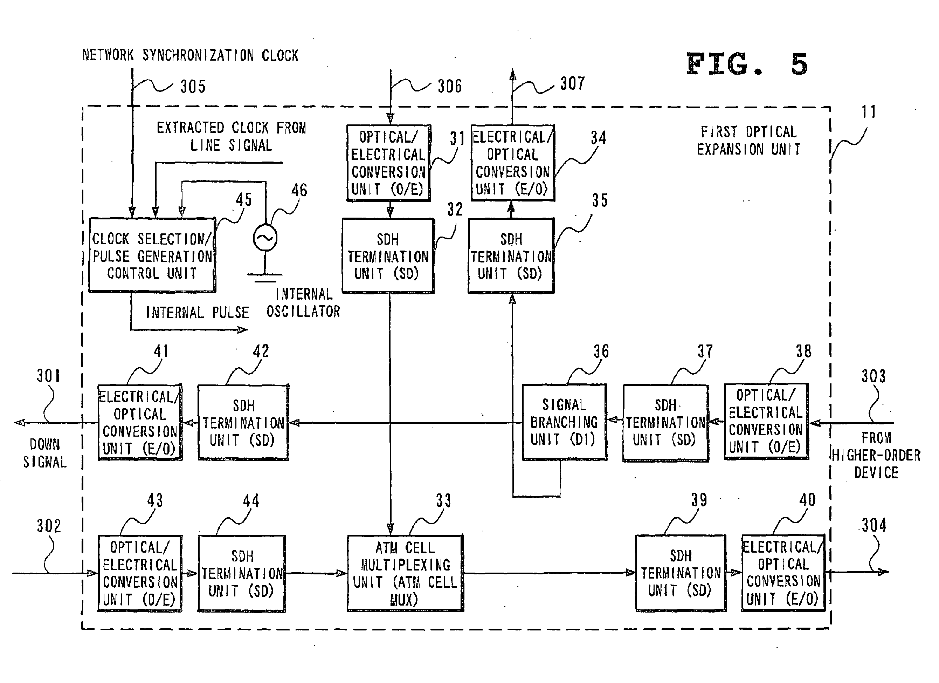

Fig. 5 is a block diagram showing a structure of the first optical expansion unit 11 mounted on the parent device 1 illustrated in Fig. 2.

In Fig. 5, the first optical expansion unit 11 includes optical/electrical conversion units (O/E) 31, 38 and 43, SDH (Synchronous Digital Hierarchy) termination units (SD) 32, 35, 37, 39, 42 and 44, an ATM cell multiplexing unit (ATM CELL MUX) 33, electrical/optical conversion units (E/O) 34, 40 and 41, a signal branching unit (DI) 36, a clock selection/pulse generation control unit 45 and an internal oscillator 46.

For an input/output interface of the first optical expansion unit 11, an optical signal, more specifically, an ATM over SDH is assumed. In other words, the input/output unit is mounted with the optical/electrical conversion units 31, 38 and 43, the electrical/optical conversion units 34, 40 and 41 and the SDH termination units 32, 35, 37, 39, 42 and 44.

306 in Fig. 5 indicates an up signal from within the parent device 1 and 302 indicates an up signal from the second optical expansion unit 14 which will be described later. These two up signals are multiplexed by the ATM cell multiplexing unit 33 to become a signal 304 which is to be sent out to a higher-order device through SDH termination processing and electrical/optical conversion.

A down signal 303 from the higher-order device is branched into two by the signal branching unit 36, one of which will be sent out as a down signal 307 in its own device and the other of which will be sent out as a down signal 301 to the second optical expansion unit 14.

305 in Fig. 5 is a network synchronization clock supplied from an office clock generation device (not shown), which is used for clock transfer. In the clock selection/pulse generation control unit 45, any of office clock, transmission path extraction clock and clock generated in the device is selected to generate a necessary pulse and distribute the same to each unit in the device. Office clock is ordinarily used.

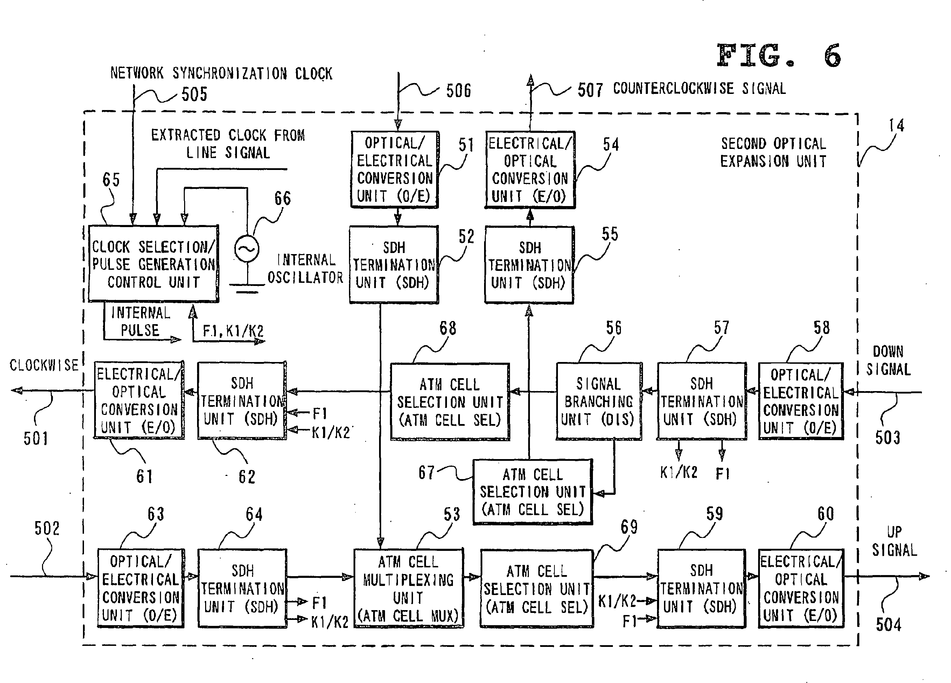

Fig. 6 is a block diagram showing an example of a structure of the second optical expansion unit 14 mounted on the parent device 1 illustrated in Fig. 1, and Fig. 7 and Fig. 8 are diagrams showing operation of the second optical expansion unit 14 shown in Fig. 6.

In Fig. 6, the second optical expansion unit 14, whose basic structure is that of the above-described first optical expansion unit 11, is formed with the addition of ATM cell selection units (ATM CELL SEL) 67, 68 and 69. More specifically, the second optical expansion unit 14 includes optical/electrical conversion units (O/E) 51, 58 and 63, SDH termination units (SD) 52, 55, 57, 59, 62 and 64, an ATM cell multiplexing unit (ATM CELL MUX) 53, electrical/optical conversion units (E/O) 54, 60 and 61, a signal multiplexing and branching unit (DIS) 56, a clock selection/pulse generation control unit 65, an internal oscillator 66 and the ATM cell selection units 67, 68 and 69.

These ATM cell selection units 67, 68 and 69 identify a signal on an ATM cell level to transmit only a signal having a specific VP number or VC number (identification number) according to an instruction of the clock selection/pulse generation control unit 65.

The ATM cell selection unit 67 selectively transmits only a counterclockwise down signal 507 out of a down signal 503 received from the first optical expansion unit 11.

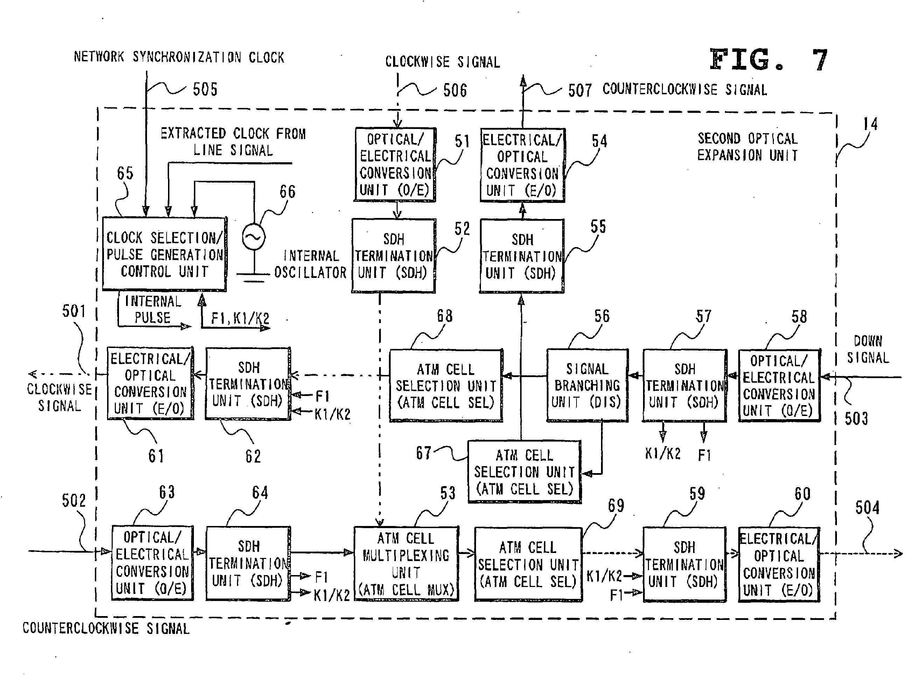

While the ATM cell selection unit 68 selects and transmits only a clockwise down signal 501 out of the down signal 503 received from the optical expansion unit 11 in a normal state, when a failure occurs in the remote devices 2-1 to 2-6 to execute recovering by the ring, it selectively transmits the same down signal as the counterclockwise down signal 507 according to an instruction of the clock selection/pulse generation control unit 65 (see Fig. 7).

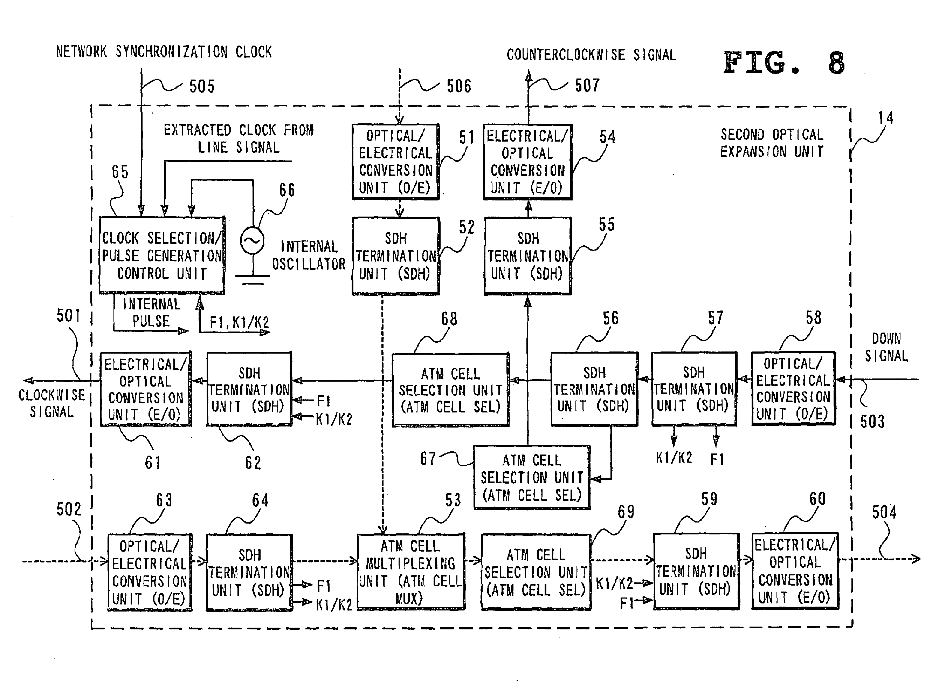

The ATM cell selection unit 69 selectively transmits only an up signal 504 out of signals 502 and 506 received from the remote office (see Fig. 8).

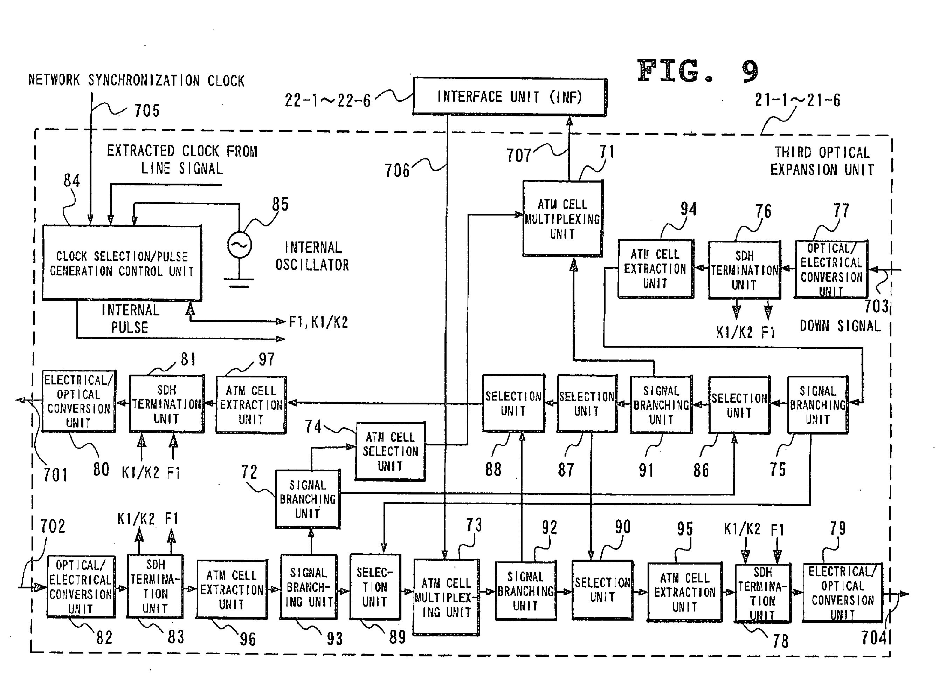

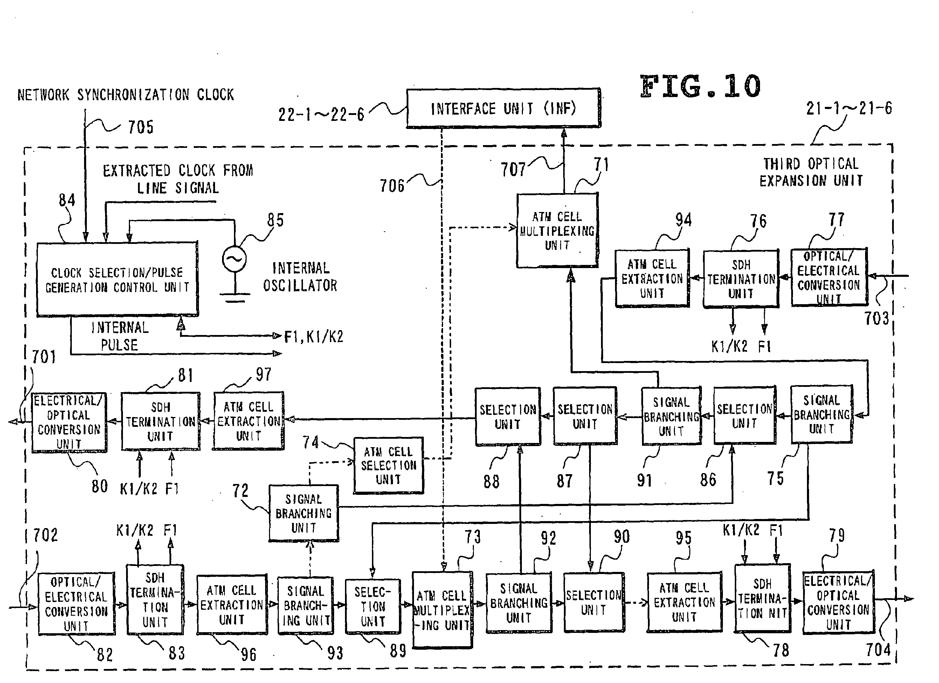

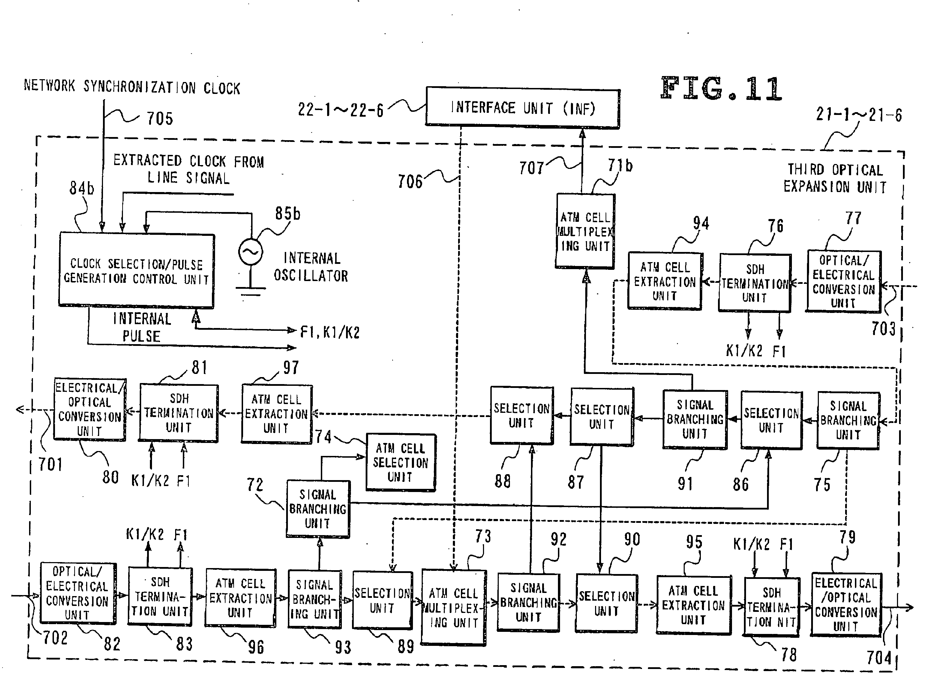

Fig. 9 is a block diagram showing an example of a structure of the third optical expansion units 21-1 to 21-6 mounted on the remote devices 2-1 to 2-6 in Fig. 1, while Fig. 10 and Fig. 11 are diagrams showing operation of the third optical expansion units 21-1 to 21-6 illustrated in Fig. 1.

The third optical expansion units 21-1 to 21-6 include ATM cell multiplexing units 71 and 73, signal branching units 72, 75 and 91 to 93, an ATM cell selection unit 74, SDH termination units 76, 78, 81 and 83, optical/electrical conversion units 77 and 82, electrical/optical conversion units 79 and 80, a clock selection/pulse generation control unit 84, an internal oscillator 85, selection units 86 to 90 and ATM cell extraction units 94 to 97.

In other words, the third optical expansion units 21-1 to 21-6, whose basic structure is that of the second optical expansion unit 14 of the parent device 1 illustrated in Fig. 6, is formed with further addition of the signal branching unit, the selection unit for separating clockwise down signal and up signal, the ATM cell multiplexing unit for multiplexing a clockwise down signal and a counterclockwise down signal and the ATM cell extraction unit. In the present example of the structure, 706 and 707 between the interface units 22-1 to 22-6 are not an optical signal but an electric signal.

Disposing the selection units 86 to 90 and the signal branching units 72, 75 and 91 to 93 in a manner as described in Fig. 9 obtains a structure enabling a traveling direction of an up signal and a down signal to be switched.

The ATM cell extraction circuits 94 to 97 are circuits for extracting a main signal cell when necessary in order to avoid meaningless signal multiplexing. The clock selection/pulse generation control unit 84 is mounted with, in addition to the clock selection and pulse generation function, the control function of controlling the selection units 86 to 90 and the ATM cell extraction circuits 94 to 97 based on overhead information (F1, K1/K2) received from the SDH termination units 76, 78, 81 and 83.

The signal branching unit 72, similarly to the signal branching units 75 and 91 to 93, is a circuit for simply branching a signal into two (copying). The ATM cell selection unit 74 operates to transmit only a signal designated as a down signal based on identification information set in advance, for example, a VP number or a VC number of an ATM cell or the like.

Accordingly, it is necessary in the present embodiment to assign different identification information (VP number or VC number, etc.) to an up signal and a down signal in advance. The ATM cell multiplexing unit 71 multiplexes a clockwise down signal and a counterclockwise down signal and transmits the obtained signal to the interface units 22-1 to 22-6 in the devices. For multiplexing on an ATM level, simple cell multiplexing is executed. The interface units 22-1 to 22-6 are assumed to have sufficient performance for processing a down signal thus multiplexed and restored.

In the present embodiment, a down signal is transmitted to the respective remote devices 2-1 to 2-6 bidirectionally, clockwise and counterclockwise, in a normal state as shown in Fig. 3. On the other hand, an up signal is transmitted clockwise and multiplexed with a clockwise down signal to flow in the same signal line (optical fiber or the like). Accordingly, in a normal state where no failure occurs, efficient signal transmission is executed using the entire capacity of bidirectional optical fibers.

In Fig. 4, shown is a flow of a signal in a case where a failure occurs in a signal line within the pipeline 224 or in the interface unit 22-4 of the remote device 2-4 or the like. In this case, cut off the remote office #4 which develops a fault from the ring and with respect to the remote offices #5 and #6, make signals travel reversely to an ordinary direction to attain a signal reaching path. At this time, the parent device 1 stops transmission of a clockwise down signal.

In the following, description will be specifically made of operation of the first optical expansion unit 11, the second optical expansion unit 14 and the third optical expansion units 21-1 to 21-6.

As a method of making a down signal which travels counterclockwise in a normal state go clockwise in an emergency, executed are notifying a warning and switching control by using overhead information of a main signal. Each device discriminates a signal traveling direction by information included in the overhead information to operate a signal selection circuit.

The parent device 1 transmits a down signal in two directions, clockwise and counterclockwise in a normal state, while it stops a clockwise signal and broadcasts a counterclockwise signal rightward and leftward in an emergency. This ensures a path for a down signal having high priority to reach the respective remote devices 2-1 to 2-6.

More specifically, at the parent device 1, the ATM cell selection unit operates with a warning notification of a failure from the remote devices 2-1 to 2-6 as a trigger to cause the same down signal (down signal having the same identification information) to flow in both right and left directions. While this can be realized by a CPU control circuit, realization all by a hardware circuit enables high-speed failure evaluation and switching operation to be realized.

Fig. 7 is a diagram showing a flow of a signal at the second optical expansion unit 14 in a normal state.

The down signal 503 received from the first optical expansion unit 11 is separated into the counterclockwise signal 507 and the clockwise signal 501 by the signal branching unit 56 and the ATM cell selection units 67 and 68. To the counterclockwise signal 507 and the clockwise signal 501, different identification information is assigned.

The counterclockwise signal 502 having made the round of the ring is the same as the transmitted counterclockwise signal 507. The clockwise signal 506 having made the round of the ring is a signal obtained by multiplexing the transmitted clockwise signal 501 with the up signals of the respective remote devices 2-1 to 2-6.

The counterclockwise signal 502 and the clockwise signal 506 are multiplexed by the ATM cell multiplexing unit 53 and then only an up signal is selected by the ATM cell selection unit 69 and transmitted as the signal 504 to the first optical expansion unit 11.

In Fig. 7, a flow of a counterclockwise signal is indicated by a solid line, a flow of a clockwise signal is indicated by a chain dotted line and an up signal of the remote devices 2-1 to 2-6 is indicated by a dotted line.

Fig. 8 is a diagram showing a flow of a signal in the second optical expansion unit 14 in an emergency. The down signal 503 received from the first optical expansion unit 11 is separated into the counterclockwise signal 507 and the clockwise signal 501 by the signal branching unit 506 and the ATM cell selection units 67 and 68. To the counterclockwise signal 507 and the clockwise signal 501 in this case, the same identification information is assigned.

At that time, the clockwise signal 501 will be the same signal as the counterclockwise signal 507. The counterclockwise signal 502 and the clockwise signal 506 to be received are both signals obtained by multiplexing an up signal of the respective remote devices 2-1 to 2-6.

The received counterclockwise signal 502 and clockwise signal 506, after being multiplexed by the ATM cell multiplexing unit 53 to pass through the ATM cell selection unit 69, are transmitted to the first optical expansion unit 11. At that time, the ATM cell selection unit 69 transmits all the applied signals.

Fig. 10 is a diagram showing a flow of a signal of the third optical expansion units 21-1 to 21-6 mounted on the respective remote devices 2-1 to 2-6 in a normal state.

Out of a received clockwise signal 702 (a signal obtained by multiplexing a down signal and an up signal), only a down signal is transmitted through the ATM cell selection unit 74 and applied to the ATM cell multiplexing unit 71. Here, the signal is multiplexed with a counterclockwise down signal 703 to restore a down signal in the parent device 1, which signal is applied to the interface units 22-1 to 22-6.

The clockwise signal 702 to be received is multiplexed at the ATM cell multiplexing unit 73 with an up signal 706 of the device in question and transmitted as a clockwise signal 704 to the remote device at the subsequent stage.

Fig. 11 is a diagram showing a flow of a signal in the third optical expansion units 21-1 to 21-6 mounted on the remote devices 2-1 to 2-6 in an emergency.

By bringing the respective selection units 86 to 90 into a state as shown in Fig. 11, operate a clockwise signal or a counterclockwise signal as a down signal and a counterclockwise signal or a clockwise signal as an up signal reversely to that in a normal state.

At the third optical expansion units 21-5 and 21-6 of the remote offices #5 and #6, for example, the received clockwise signal 702 is multiplexed with the up signal 706 at the ATM cell multiplexing unit 73 and the multiplexed signal is branched by the signal branching unit 92, so that one is transmitted as the down signal 704 to the adjacent remote device and the other is sent to the selection unit 88 and transmitted as a counterclockwise signal 701 (up signal).

In addition, at the third optical expansion units 21-1, 21-2 and 21-3 of the remote offices #1, #2 and #3, the received counterclockwise signal 703 is branched by the signal branching unit 75, so that one is transmitted as the counterclockwise signal 701 and the other is multiplexed with an up signal at the ATM cell multiplexing unit 73 through the selection unit 89 and transmitted as the clockwise signal 704 (up signal).

At that time, the ATM cell selection unit 74 prevents a signal from transmitting such that both the rightward and leftward received signals 702 and 703 are not multiplexed by the ATM cell multiplexing unit 71.

Thus, by assigning a part of a down signal to a free band of an up signal flowing on the ring, the present embodiment enables a transmission capacity in a normal state to be increased without involving change or expansion of hardware.

In addition, by giving a down signal two priorities, high priority and low priority, the present embodiment enables a down signal having high priority to be remedied at the time of switching a direction of a signal traveling on the ring in an emergency.

Furthermore, the present embodiment realizes rapid control operation by using overhead information of a main signal which travels in the ring to give a warning notification or execute switching control.

### Applicability in the Industry

Although the present invention is premised on an ADSZ as an asymmetric access line and an optical ATM signal as an integration signal as described above with respect to the embodiment, it does not define a signal transmission system. As an access line, applicable are, for example, other DSL (Digital Subscriber Line) system [e.g. VDSL (Very High Bit Rate Digital Subscriber Line)], electric or optical Ethernet (Registered Trademark), and a case where up and down PON (Passive optical Network) signal capacities are asymmetric.

The present invention also allows other systems to be adopted as an integration signal such as optical Ethernet (Registered Trademark), PON, and SONET/SDH (Synchronous Optical Network/Synchronous Digital Hierarchy) line multiplexing. Signal traveling directions in a normal state and at a time of a failure can be reversely set to those in the above-described embodiment.

Furthermore, while the above-described embodiment illustrates an example in which provided as a separate unit is the integrated gateway unit, or are the interface unit and the optical expansion unit, it is also possible to form these into one unit, to realize the first optical expansion unit and the second optical expansion unit as one unit and to wavelength-multiplex up and down integration signals and transmit the obtained signal by one optical fiber.

Although the invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. An access line termination system with an access line termination device which is configured to terminate asymmetric up signal and down signal connected in a ring for causing said up signal and said down signal to travel, wherein
said down signal is separated to travel rightward and leftward on said ring, and
said access line termination device includes a multiplexing unit which is configured to multiplex either one of said rightward and leftward down signals with said up signal to transmit the multiplexed signal on the same signal line
**characterized by** :
different priorities being provided for said separated down signals, the down signal having low priority being multiplexed with said up signal.

2. The access line termination system as set forth in claim 1, wherein
an upper limit of a capacity of said down signal with which said up signal is multiplexed is set to be a value obtained by subtracting a total sum of a capacity of said up signal from a transmission capacity of said signal line forming the ring.

3. The access line termination system as set forth in claim 1 or 2, wherein
said access line termination device is configured to branch said received rightward and leftward down signals to multiplex one of said rightward and leftward down signals branched, while distributing the other of said rightward and leftward down signals to adjacent said access line termination device.

4. The access line termination system as set forth in one of claims 1 to 3, wherein
said access line termination device is configured to execute processing of selecting said down signal and said up signal based on identification information assigned to said rightward and leftward down signals and said up signal for the identification with each other.

5. The access line termination system as set forth in one of claims 1 to 4, wherein
different priorities are provided for said separated down signals,
when a failure occurs on said ring, only said down signal having high priority is caused to travel rightward and leftward on said ring, and
said access line termination device is configured to multiplex any of said rightward and leftward down signals with said up signal to transmit the multiplexed signal to a direction different from the direction of said down signal received.

6. The access line termination system as set forth in claim 5, wherein
switching control of said access line termination device is executed by using overhead information of a main signal which is traveled on said ring.

7. An access line termination device which is configured to terminate asymmetric up signal and down signal and to form a ring together with other adjacent device to cause said up signal and said down signal to travel, which
is configured to separate said down signal to cause the signal to travel rightward and leftward on said ring, and
includes a multiplexing unit which is configured to multiplex either one of said rightward and leftward down signals with said up signal to transmit the multiplexed signal on the same signal line, **characterized by** :
different priorities being provided for said separated down signals,
the down signal having low priority being multiplexed with said up signal.

8. The access line termination device as set forth in claim 7, wherein
an upper limit of a capacity of said down signal with which said up signal is multiplexed is set to be a value obtained by subtracting a total sum of a capacity of said up signal from a transmission capacity of said signal line forming the ring.

9. The access line termination device as set forth in claim 7 or 8, which is configured to branch said received rightward and leftward down signals to multiplex one of said rightward and leftward down signals branched, while distributing the other of said rightward and leftward down signals to adjacent said access line termination device.

10. The access line termination device as set forth in one of claims 7 to 9, which is configured to execute processing of selecting said <1> down signal and said up signal based on identification information assigned to said rightward and leftward down signals and said up signal for the identification with each other.

11. The access line termination device as set forth in one of claims 7 to 10, wherein
different priorities are provided for said separated down signals,
when a failure occurs on said ring, it is configured to cause only said down signal having high priority to travel rightward and leftward on said ring, and
it is configured to multiplex any of said rightward and leftward down signals with said up signal to transmit the multiplexed signal to a direction different from the direction of said down signal received.

12. The access line termination device as set forth in claim 11, wherein
it is configured to execute switching control of said access line termination device by using overhead information of a main signal which is traveled on said ring.

13. A transmission control method of an access line termination system with an access line termination device which is configured to terminate asymmetric up signal and down signal connected in a ring to cause said up signal and said down signal to travel, comprising the steps of:
separating said down signal to cause the obtained signal to travel rightward and leftward on said ring, and
multiplexing either one of said rightward and leftward down signals with said up signal and transmitting the multiplexed signal on the same signal line
**characterized by** :
multiplexing, with different priorities provided for said separated down signals, the down signal having low priority with said up signal.

14. The transmission control method of an access line termination system as set forth in claim 13, comprising the step of
setting an upper limit of a capacity of said down signal with which said up signal is multiplexed to be a value obtained by subtracting a total sum of a capacity of said up signal from a transmission capacity of said signal line forming the ring.

15. The transmission control method of an access line termination system as set forth in claim 13 or 14, comprising the step of
branching said received rightward and leftward down signals and multiplexing one of said rightward and leftward down signals branched, while distributing the other of said rightward and leftward down signals to adjacent said access line termination device.

16. The transmission control method of an access line termination system as set forth in one of claims 13 to 15, comprising the step of
executing processing of selecting said down signal and said up signal based on identification information assigned to said rightward and leftward down signals and said up signal for the identification with each other.

17. The transmission control method of an access line termination system as set forth in one of claims 13 to 16, comprising the steps of:
with different priorities provided for said separated down signals,
when a failure occurs on said ring, causing only said down signal having high priority to travel rightward and leftward on said ring, and
multiplexing any of said rightward and leftward down signals with said up signal and transmitting the multiplexed signal to a direction different from the direction of said down signal received.

18. The transmission control method of an access line termination system as set forth in claim 17, comprising the step of
executing switching control of said access line termination device by using overhead information of a main signal which is traveled on said ring.

## Patentansprüche

1. Zugangsleitungs-Abschlusssystem mit einer Zugangsleitungs-Abschlussvorrichtung, die konfiguriert ist, um ein Aufwärtssignal und ein Abwärtssignal, die asymmetrisch sind, abzuschließen, und in einem Ring angeschlossen ist, um das Aufwärtssignal und das Abwärtssignal dazu zu veranlassen, sich zu bewegen, wobei
das Abwärtssignal separiert wird, damit es sich nach rechts und nach links in dem Ring bewegt, und
die Zugangsleitungs-Abschlussvorrichtung eine Multiplexierungseinheit umfasst, die konfiguriert ist, um entweder das Abwärtssignal nach rechts oder das Abwärtssignal nach links mit dem Aufwärtssignal zu multiplexieren, um das multiplexierte Signal auf derselben Signalleitung zu übertragen,
**dadurch gekennzeichnet, dass**:
unterschiedliche Prioritäten für die separierten Abwärtssignale vorgesehen werden, wobei das Abwärtssignal mit niedriger Priorität mit dem Aufwärtssignal multiplexiert wird.

2. Zugangsleitungs-Abschlusssystem nach Anspruch 1, wobei
eine obere Grenze einer Kapazität des Abwärtssignals, mit dem das Aufwärtssignal multiplexiert wird, auf einen Wert gesetzt ist, der durch Subtrahieren einer Gesamtsumme einer Kapazität des Aufwärtssignals von einer Übertragungskapazität der den Ring bildenden Signalleitung erhalten wird.

3. Zugangsleitungs-Abschlusssystem nach Anspruch 1 oder 2, wobei
die Zugangsleitungs-Abschlussvorrichtung konfiguriert ist, um die empfangenen Abwärtssignale nach rechts und nach links zu verzweigen, um eines der verzweigten Abwärtssignale nach rechts bzw. nach links zu multiplexieren, während das andere der Abwärtssignale nach rechts bzw. nach links in die Nähe der Zugangsleitungs-Abschlussvorrichtung verteilt wird.

4. Zugangsleitungs-Abschlusssystem nach einem der Ansprüche 1 bis 3, wobei
die Zugangsleitungs-Abschlussvorrichtung konfiguriert ist, um eine Verarbeitung des Auswählens des Abwärtssignals und des Aufwärtssignals anhand von Identifizierungsinformationen, die den Abwärtssignalen nach rechts und nach links und dem Aufwärtssignal zugewiesen sind, um sie miteinander zu identifizieren, auszuführen.

5. Zugangsleitungs-Abschlusssystem nach einem der Ansprüche 1 bis 4, wobei
für die separierten Abwärtssignale unterschiedliche Prioritäten vorgesehen werden,
dann, wenn in dem Ring ein Fehler auftritt, nur das Abwärtssignal mit hoher Priorität dazu veranlasst wird, sich in dem Ring nach rechts und nach links zu bewegen, und
die Zugangsleitungs-Abschlussvorrichtung konfiguriert ist, um irgendeines der Abwärtssignale nach rechts und nach links mit dem Aufwärtssignal zu multiplexieren, um das multiplexierte Signal in einer Richtung, die von der Richtung des empfangenen Abwärtssignals verschieden ist, zu übertragen.

6. Zugangsleitungs-Abschlusssystem nach Anspruch 5, wobei
eine Vermittlungssteuerung der Zugangsleitungs-Abschlussvorrichtung unter Verwendung von Zugangsinformationen eines in dem Ring sich bewegenden Hauptsignals ausgeführt wird.

7. Zugangsleitungs-Abschlussvorrichtung, die konfiguriert ist, um ein Aufwärtssignal und ein Abwärtssignal, die asymmetrisch sind, abzuschließen und um zusammen mit einer anderen, benachbarten Vorrichtung einen Ring zu bilden, um das Aufwärtssignal und das Abwärtssignal dazu zu veranlassen, sich zu bewegen, wobei die Vorrichtung
konfiguriert ist, um das Abwärtssignal zu separieren, um zu bewirken, dass sich das Signal in dem Ring nach rechts und nach links bewegt, und
eine Multiplexierungseinheit enthält, die konfiguriert ist, um entweder das Abwärtssignal nach rechts oder das Abwärtssignal nach links mit dem Aufwärtssignal zu multiplexieren, um das multiplexierte Signal auf derselben Signalleitung zu übertragen, **dadurch gekennzeichnet, dass**:
für die separierten Abwärtssignale unterschiedliche Prioritäten vorgesehen werden und
das Abwärtssignal mit niedriger Priorität mit dem Aufwärtssignal multiplexiert wird.

8. Zugangsleitungs-Abschlussvorrichtung nach Anspruch 7, wobei
eine obere Grenze einer Kapazität des Abwärtssignals, mit dem das Aufwärtssignal multiplexiert wird, auf einen Wert gesetzt wird, der durch Subtrahieren einer Gesamtsumme einer Kapazität des Aufwärtssignals von einer Übertragungskapazität der den Ring bildenden Signalleitung erhalten wird.

9. Zugangsleitungs-Abschlussvorrichtung nach Anspruch 7 oder 8, die konfiguriert ist, um die empfangenen, nach rechts bzw. nach links laufenden Abwärtssignale zu verzweigen, um entweder das verzweigte Abwärtssignal nach rechts oder das verzweigte Abwärtssignal nach links zu multiplexieren, während das andere der Abwärtssignale nach rechts bzw. nach links in die Nähe der Zugangsleitungs-Abschlussvorrichtung verteilt wird.

10. Zugangsleitungs-Abschlussvorrichtung nach einem der Ansprüche 7 bis 9, die konfiguriert ist, um eine Verarbeitung des Auswählens des Abwärtssignals und des Aufwärtssignals anhand von Identifizierungsinformationen, die den Abwärtssignalen nach rechts und nach links und dem Aufwärtssignal zugewiesen sind, um sie miteinander zu identifizieren, auszuführen.

11. Zugangsleitungs-Abschlussvorrichtung nach einem der Ansprüche 7 bis 10, wobei
für die separierten Abwärtssignale verschiedene Prioritäten vorgesehen sind,
sie konfiguriert ist, um dann, wenn in dem Ring ein Fehler auftritt, zu bewirken, dass sich nur das Abwärtssignal mit hoher Priorität in dem Ring nach rechts und nach links bewegt, und
sie konfiguriert ist, um entweder das Abwärtssignal nach rechts oder das Abwärtssignal nach links mit dem Aufwärtssignal zu multiplexieren und das multiplexierte Signal in einer von der Richtung des empfangenen Signals verschiedenen Richtung zu übertragen.

12. Zugangsleitungs-Abschlussvorrichtung nach Anspruch 11, wobei
sie konfiguriert ist, um eine Vermittlungssteuerung der Zugangsleitungs-Abschlussvorrichtung unter Verwendung von Zusatzinformationen eines Hauptsignals, das sich in dem Ring bewegt, auszuführen.

13. Übertragungssteuerverfahren eines Zugangsleitungs-Abschlusssystems, das eine Zugangsleitungs-Abschlussvorrichtung besitzt, die konfiguriert ist, um ein Aufwärtssignal und ein Abwärtssignal, die asymmetrisch sind, abzuschließen, und in einem Ring angeschlossen ist, um zu bewirken, dass sich das Aufwärtssignal und das Abwärtssignal bewegen, das die folgenden Schritte umfasst:
Separieren des Abwärtssignals, um zu bewirken, dass sich das erhaltene Signal in dem Ring nach rechts und nach links bewegt, und
Multiplexieren entweder des Abwärtssignals nach rechts oder des Abwärtssignals nach links mit dem Aufwärtssignal und Übertragen des multiplexierten Signals auf derselben Signalleitung,
**dadurch gekennzeichnet, dass**:
unterschiedliche Prioritäten vorgesehen werden und das Abwärtssignal mit einer niedrigen Priorität mit dem Aufwärtssignal multiplexiert wird.

14. Übertragungssteuerverfahren eines Zugangsleitungs-Abschlusssystems nach Anspruch 13, das den folgenden Schritt umfasst:
Setzen einer oberen Grenze einer Kapazität des Abwärtssignals, mit dem das Aufwärtssignal multiplexiert wird, auf einen Wert, der durch Subtrahieren einer Gesamtsumme einer Kapazität des Aufwärtssignals von einer Übertragungskapazität der den Ring bildenden Signalleitung erhalten wird.

15. Übertragungssteuerverfahren eines Zugangsleitungs-Abschlusssystems nach Anspruch 13 oder 14, das den folgenden Schritt umfasst:
Verzweigen der empfangenen, nach rechts und nach links laufenden Abwärtssignale und Multiplexieren entweder des verzweigten Abwärtssignals nach rechts oder des verzweigten Abwärtssignals nach links, während das andere der Abwärtssignale nach rechts und nach links in die Nähe der Zugangsleitungs-Abschlussvorrichtung verteilt wird.

16. Übertragungssteuerverfahren eines Zugangsleitungs-Abschlusssystems nach einem der Ansprüche 13 bis 15, das den folgenden Schritt umfasst:
Ausführen einer Verarbeitung des Auswählens des Abwärtssignals und des Aufwärtssignals anhand von Identifizierungsinformationen, die den Abwärtssignalen nach rechts und nach links und dem Aufwärtssignal zugewiesen werden, um sie miteinander zu identifizieren.

17. Übertragungssteuerverfahren eines Zugangsleitungs-Abschlusssystems nach einem der Ansprüche 13 bis 16, das die folgenden Schritte umfasst:
Vorsehen unterschiedlicher Prioritäten für die separierten Abwärtssignale,
dann, wenn in dem Ring ein Fehler auftritt, Veranlassen nur des Abwärtssignals mit hoher Priorität, sich nach rechts und nach links in dem Ring zu bewegen, und
Multiplexieren entweder des Abwärtssignals nach rechts oder des Abwärtssignals nach links mit dem Aufwärtssignal und Übertragen des multiplexierten Signals in einer von der Richtung des empfangenen Abwärtssignals verschiedenen Richtung.

18. Übertragungssteuerverfahren eines Zugangsleitungs-Abschlusssystems nach Anspruch 17, das den folgenden Schritt umfasst:
Ausführen einer Vermittlungssteuerung der Zugangsleitungs-Abschlussvorrichtung unter Verwendung von Zusatzinformationen eines Hauptsignals, das sich in dem Ring bewegt.

## Revendications

1. Système de terminaison de ligne d'accès comprenant un dispositif de terminaison de ligne d'accès qui est configuré pour mettre un terme à un signal sur la liaison montante et à un signal sur la liaison descendante asymétriques reliés dans un anneau, dans le but d'amener ledit signal sur la liaison montante et ledit signal sur la liaison descendante à circuler, dans lequel :
ledit signal sur la liaison descendante est séparé de façon à circuler vers la droite et la gauche sur ledit anneau ; et
ledit dispositif de terminaison de ligne d'accès comprend une unité de multiplexage qui est configurée pour multiplexer l'un des signaux sur la liaison descendante qui circulent vers la droite et vers la gauche avec ledit signal sur la liaison montante, de façon à transmettre le signal multiplexé sur la même ligne d'acheminement de signaux,
**caractérisé par le fait que** :
des priorités différentes sont définies pour lesdits signaux sur la liaison descendante séparés, le signal sur la liaison descendante qui a une priorité basse étant multiplexé avec ledit signal sur la liaison montante.

2. Système de terminaison de ligne d'accès selon la revendication 1, dans lequel :
une limite supérieure d'une capacité dudit signal sur la liaison descendante avec lequel ledit signal sur la liaison montante est multiplexé, est définie comme étant une valeur obtenue en soustrayant une somme totale d'une capacité dudit signal sur la liaison montante, à partir d'une capacité de transmission de ladite ligne d'acheminement de signaux formant l'anneau.

3. Système de terminaison de ligne d'accès selon la revendication 1 ou 2, dans lequel :
ledit dispositif de terminaison de ligne d'accès est configuré pour ramifier lesdits signaux sur la liaison descendante reçus - qui circulent vers la droite et vers la gauche - de façon à multiplexer l'un desdits signaux sur la liaison descendante ramifiés - qui circulent vers la droite et vers la gauche - tout en distribuant l'autre desdits signaux sur la liaison descendante qui circulent vers la droite et vers la gauche vers une position adjacente au dit dispositif de terminaison de ligne d'accès.

4. Système de terminaison de ligne d'accès selon l'une des revendications 1 à 3, dans lequel :
ledit dispositif de terminaison de ligne d'accès est configuré pour exécuter une opération de sélection dudit signal sur la liaison descendante et dudit signal sur la liaison montante en se basant sur des informations d'identification attribuées auxdits signaux sur la liaison descendante qui circulent vers la droite et vers la gauche, et audit signal sur la liaison montante, de façon à les identifier l'un par rapport à l'autre.

5. Système de terminaison de ligne d'accès selon l'une des revendications 1 à 4, dans lequel :
des priorités différentes sont définies pour lesdits signaux séparés sur la liaison descendante,
quand une défaillance se produit sur ledit anneau, uniquement ledit signal sur la liaison descendante qui a une priorité élevée est amené à circuler vers la droite et vers la gauche sur ledit anneau ; et
ledit dispositif de terminaison de ligne d'accès est configuré pour multiplexer l'un quelconque desdits signaux sur la liaison descendante qui circulent vers la droite et vers la gauche avec ledit signal sur la liaison montante, de façon à transmettre le signal multiplexé sur une direction différente de la direction dudit signal sur la liaison descendante reçu.

6. Système de terminaison de ligne d'accès selon la revendication 5, dans lequel :
une commande de commutation dudit dispositif de terminaison de ligne d'accès est exécutée en utilisant des informations d'entête d'un signal principal qui circule sur ledit anneau.

7. Dispositif de terminaison de ligne d'accès, qui est configuré pour mettre un terme à un signal sur la liaison montante et à un signal sur la liaison descendante asymétriques, et pour former un anneau avec un autre dispositif adjacent, dans le but d'amener ledit signal sur la liaison montante et ledit signal sur la liaison descendante à circuler, qui :
est configuré pour séparer ledit signal sur la liaison descendante de façon à amener le signal à circuler vers la droite et la gauche sur ledit anneau ; et
comprend une unité de multiplexage qui est configurée pour multiplexer l'un des signaux sur la liaison descendante qui circulent vers la droite et vers la gauche avec ledit signal sur la liaison montante, de façon à transmettre le signal multiplexé sur la même ligne d'acheminement de signaux, **caractérisé par le fait que** :
des priorités différentes sont définies pour lesdits signaux séparés sur la liaison descendante,
le signal sur la liaison descendante qui a une priorité élevée est multiplexé avec ledit signal sur la liaison montante.

8. Dispositif de terminaison de ligne d'accès selon la revendication 7, dans lequel :
une limite supérieure d'une capacité dudit signal sur la liaison descendante avec lequel ledit signal sur la liaison montante est multiplexé, est définie comme étant une valeur obtenue en soustrayant une somme totale d'une capacité dudit signal sur la liaison montante, à partir d'une capacité de transmission de ladite ligne d'acheminement de signaux formant l'anneau.

9. Dispositif de terminaison de ligne d'accès selon la revendication 7 ou 8, qui est configuré pour ramifier lesdits signaux sur la liaison descendante reçus - qui circulent vers la droite et vers la gauche - de façon à multiplexer l'un desdits signaux sur la liaison descendante ramifiés - qui circulent vers la droite et vers la gauche - tout en distribuant l'autre desdits signaux sur la liaison descendante qui circulent vers la droite et vers la gauche vers une position adjacente au dit dispositif de terminaison de ligne d'accès.

10. Dispositif de terminaison de ligne d'accès selon l'une des revendications 7 à 9, qui est configuré pour exécuter une opération de sélection dudit signal sur la liaison descendante et dudit signal sur la liaison montante en se basant sur des informations d'identification attribuées aux dits signaux sur la liaison descendante qui circulent vers la droite et vers la gauche, et au dit signal sur la liaison montante, de façon à les identifier l'un par rapport à l'autre.

11. Dispositif de terminaison de ligne d'accès selon l'une des revendications 7 à 10, dans lequel :
des priorités différentes sont définies pour lesdits signaux séparés sur la liaison descendante,
quand une défaillance se produit sur ledit anneau, il est configuré pour amener uniquement ledit signal sur la liaison descendante qui a une priorité élevée à circuler vers la droite et vers la gauche sur ledit anneau ; et
il est configuré pour multiplexer l'un quelconque desdits signaux sur la liaison descendante qui circulent vers la droite et vers la gauche avec ledit signal sur la liaison montante, de façon à transmettre le signal multiplexé sur une direction différente de la direction dudit signal sur la liaison descendante reçu.

12. Dispositif de terminaison de ligne d'accès selon la revendication 11, dans lequel :
il est configuré pour exécuter une commande de commutation dudit dispositif de terminaison de ligne d'accès en utilisant des informations d'entête d'un signal principal qui circule sur ledit anneau.

13. Procédé de commande de transmission d'un système de terminaison de ligne d'accès comprenant un dispositif de terminaison de ligne d'accès qui est configuré pour mettre un terme à un signal sur la liaison montante et à un signal sur la liaison descendante asymétriques reliés dans un anneau, dans le but d'amener ledit signal sur la liaison montante et ledit signal sur la liaison descendante à circuler, comprenant les étapes consistant à :
séparer ledit signal sur la liaison descendante de façon à amener le signal obtenu à circuler vers la droite et la gauche sur ledit anneau ; et
multiplexer l'un des signaux sur la liaison descendante qui circulent vers la droite et vers la gauche avec ledit signal sur la liaison montante, et transmettre le signal multiplexé sur la même ligne d'acheminement de signaux, **caractérisé par** l'étape consistant à :
multiplexer, avec des priorités différentes définies pour lesdits signaux sur la liaison descendante séparés, le signal sur la liaison descendante qui a une priorité basse, avec ledit signal sur la liaison montante.

14. Procédé de commande de transmission d'un système de terminaison de ligne d'accès selon la revendication 13, comprenant l'étape consistant à :
définir une limite supérieure d'une capacité dudit signal sur la liaison descendante avec lequel ledit signal sur la liaison montante est multiplexé, comme étant une valeur obtenue en soustrayant une somme totale d'une capacité dudit signal sur la liaison montante, à partir d'une capacité de transmission de ladite ligne d'acheminement de signaux formant l'anneau.

15. Procédé de commande de transmission d'un système de terminaison de ligne d'accès selon la revendication 13 ou 14, comprenant l'étape consistant à :
ramifier lesdits signaux sur la liaison descendante reçus - qui circulent vers la droite et vers la gauche - et multiplexer l'un desdits signaux sur la liaison descendante ramifiés - qui circulent vers la droite et vers la gauche - tout en distribuant l'autre desdits signaux sur la liaison descendante qui circulent vers la droite et vers la gauche vers une position adjacente au dit dispositif de terminaison de ligne d'accès.

16. Procédé de commande de transmission d'un système de terminaison de ligne d'accès selon l'une des revendications 13 à 15, comprenant l'étape consistant à :
exécuter une opération de sélection dudit signal sur la liaison descendante et dudit signal sur la liaison montante en se basant sur des informations d'identification attribuées aux dits signaux sur la liaison descendante qui circulent vers la droite et vers la gauche, et au dit signal sur la liaison montante, de façon à les identifier l'un par rapport à l'autre.

17. Procédé de commande de transmission d'un système de terminaison de ligne d'accès selon l'une des revendications 13 à 16,
comprenant les étapes consistant à :
avec des priorités différentes définies pour lesdits signaux séparés sur la liaison descendante,
quand une défaillance se produit sur ledit anneau, amener uniquement ledit signal sur la liaison descendante qui a une priorité élevée à circuler vers la droite et vers la gauche sur ledit anneau ; et
multiplexer l'un quelconque desdits signaux sur la liaison descendante qui circulent vers la droite et vers la gauche avec ledit signal sur la liaison montante, et transmettre le signal multiplexé sur une direction différente de la direction dudit signal sur la liaison descendante reçu.

18. Procédé de commande de transmission d'un système de terminaison de ligne d'accès selon la revendication 17, comprenant l'étape consistant à :
exécuter une commande de commutation dudit dispositif de terminaison de ligne d'accès en utilisant des informations d'entête d'un signal principal qui circule sur ledit anneau.
